# FASCICULE DE BREVET EUROPEEN

(11) **EP 2 080 689 B1**
(45) Date de publication et mention de la délivrance du brevet: **16.07.2014**
(21) Numéro de dépôt: 09150022.3
(22) Date de dépôt: 05.01.2009
(51) Int. Cl.: B62D 21/15, B62D 25/04, B62D 25/08

(54) **Dispositif de renfort latéral pour bloc avant de véhicule automobile et véhicule automobile équipé d'un tel dispositif**
Vorrichtung zur seitlichen Verstärkung des Vorderbaus eines Kraftfahrzeugs und mit einer solchen Vorrichtung ausgestattetes Kraftfahrzeug
Side reinforcement device for the front block of an automobile and automobile equipped with such a device

(30) Priorité: 16.01.2008 FR 0850265; 16.01.2008 FR 0850266
(43) Date de publication de la demande: 22.07.2009
(73) Titulaire: PEUGEOT CITROËN AUTOMOBILES S.A., 78140 Vélizy Villacoublay (FR)
(72) Inventeur: Massif, Kévin, 78280 Guyancourt (FR); Grosset, Romain, 92380 Garches (FR)

(56) Documents cités:
- EP-A- 1 149 756
- EP-A- 1 256 509
- DE-A1- 19 714 631
- US-A1- 2004 140 693

## Description

La présente invention a trait à un dispositif de renfort latéral destiné équiper un bloc avant d'un véhicule automobile et à un véhicule automobile comprenant un tel dispositif de renfort.

Dans le domaine automobile, il est connu d'équiper le bloc avant d'un véhicule avec des dispositifs de renfort latéraux destinés à assurer une transmission efficace des efforts résultant d'un choc frontal sur le véhicule à l'ensemble de la structure de caisse du véhicule. De tels dispositifs de renfort visent essentiellement à faire transiter les efforts issus d'un choc frontal rapidement vers l'arrière de la structure de caisse du véhicule, de manière à préserver l'espace d'habitacle et à protéger les passagers du véhicule.

Un véhicule tel que décrit par le préambule de la revendication 1 et comportant un bloc avant équipé de renforts latéraux destinés à assurer une transmission des efforts résultant d'un choc frontal sur le véhicule à l'ensemble de la structure de caisse du véhicule est par exemple divulgué dans le document DE-A1-197 14 631. Afin d'obtenir une transmission d'efforts optimale lors d'un choc frontal, les renforts latéraux présentent une enveloppe extérieure sensiblement en forme de U dans laquelle est positionnée une nervure allongée. Un tel dispositif de renfort comprend des éléments de géométrie relativement complexe, dont la fabrication nécessite l'utilisation d'un outillage perfectionné. Il en résulte un coût de fabrication relativement élevé de ce dispositif de renfort.

C'est à ces inconvénients qu'entend plus particulièrement remédier l'invention en proposant un dispositif de renfort latéral destiné à équiper un bloc avant de véhicule automobile, ce dispositif de renfort garantissant, lors d'un choc frontal sur le véhicule, une transmission efficace des efforts de choc vers l'arrière de la structure de caisse du véhicule, tout en ayant un coût de fabrication limité.

A cet effet, l'invention a pour objet une structure de caisse de véhicule automobile conforme à l'objet de la revendication 1.

Selon d'autres caractéristiques avantageuses d'un dispositif de renfort selon l'invention, prises isolément ou selon toutes les combinaisons techniquement possibles :
- la deuxième partie de l'élément de renfort est à section transversale en U, la nervure de l'élément de doublure étant destinée à être reçue dans le volume intérieur d'une portion d'extrémité de la deuxième partie la plus proche de la première partie de l'élément de renfort ;
- la deuxième partie de l'élément de renfort est de forme allongée et a une structure ondulée, formée par une succession de nervures et de creux transversaux, juxtaposés selon la direction de l'axe longitudinal de l'élément de renfort, chaque nervure et chaque creux s'étendant sur toute la section transversale en U de la deuxième partie, depuis le bord d'une paroi formant une aile du U jusqu'au bord de la paroi opposée formant l'autre aile du U ;
- la deuxième partie de l'élément de renfort a une longueur, selon la direction de l'axe longitudinal, égale à la distance maximale acceptable de recul du bloc moteur du véhicule en direction du pied avant ;
- la première partie de l'élément de renfort est destinée à être fixée sur le pied avant dans le prolongement d'un profilé de bandeau longitudinal d'une porte du véhicule montée sur le pied avant ;
- la première partie de l'élément de renfort est de forme allongée, l'axe longitudinal de la première partie étant destiné à être sensiblement aligné avec l'axe longitudinal du profilé de bandeau de porte en configuration fixée de l'élément de renfort sur la structure de caisse du véhicule ;
- l'élément de renfort et l'élément de doublure sont formés chacun par une pièce de tôle mise en forme par emboutissage ;
- l'élément de doublure est une doublure d'aile du bloc avant du véhicule, la nervure étant ménagée sur une face externe de l'élément de doublure ;
- les première et deuxième parties de l'élément de renfort sont reliées l'une à l'autre par une partie centrale comportant une portion destinée à s'étendre en direction du soubassement du véhicule en configuration fixée de l'élément de renfort sur la structure de caisse du véhicule ;
- l'élément de renfort a une section transversale en Ω sur toute sa longueur, les pattes latérales du Ω formant des pattes de fixation de l'élément de renfort sur la paroi latérale.

L'invention a également pour objet un véhicule automobile comprenant un dispositif de renfort tel que décrit ci-dessus, fixé sur la structure de caisse du véhicule au niveau de chaque paroi latérale précitée du bloc avant du véhicule.

Selon d'autres caractéristiques avantageuses d'un véhicule automobile selon l'invention, chaque élément de renfort est fixé entre la structure de caisse latérale du bloc avant et une face externe de la paroi latérale correspondante du bloc avant.

Les caractéristiques et avantages de l'invention apparaîtront dans la description qui va suivre d'un mode de réalisation d'un dispositif de renfort et d'un véhicule automobile conformes à l'invention, donnée uniquement à titre d'exemple et faite en se référant aux dessins annexés dans lesquels :
- la figure 1 est une vue de côté d'une paroi latérale droite d'un bloc avant d'un véhicule automobile équipé d'un dispositif de renfort conforme à l'invention ;
- la figure 2 est une vue en perspective, partielle et à plus grande échelle, d'un élément de renfort du dispositif de la figure 1 ;
- la figure 3 est une vue analogue à la figure 1, l'élément de renfort et le profilé de bandeau de porte de la figure 2 ayant été omis sur la figure 3 ; et
- la figure 4 est une vue de côté d'un élément de doublure du dispositif de la figure 1.

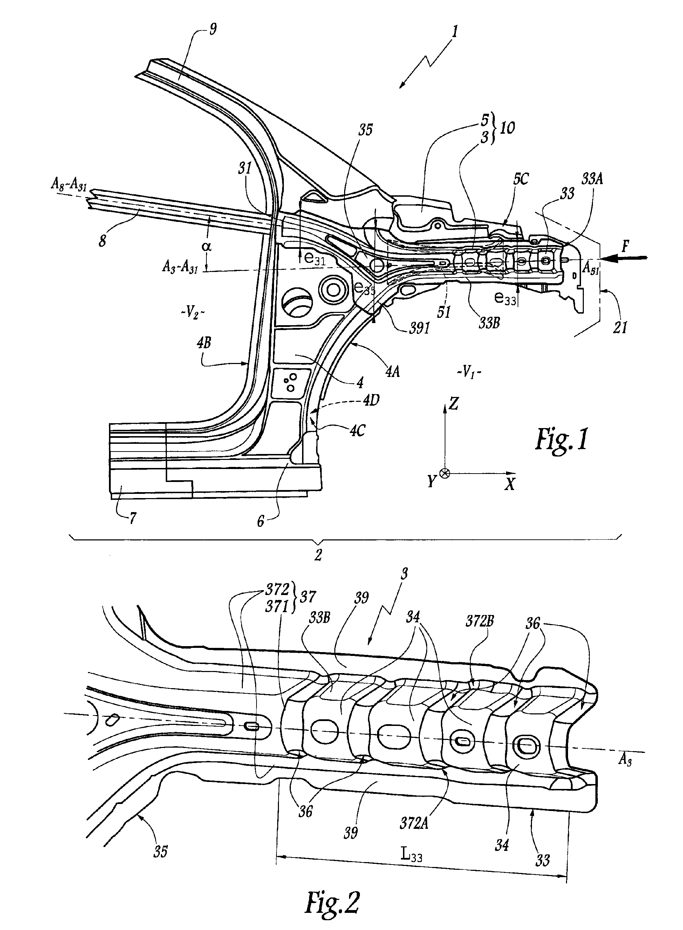

Sur la figure 1 est représentée une paroi latérale 4 appartenant au bloc avant 2 d'un véhicule automobile 1, qui, dans cet exemple, est une paroi de renfort d'un pied de montant avant 6 du véhicule 1. Telle que représentée sur la figure 1, la paroi 4 est une paroi latérale droite du bloc avant 2, cette paroi étant vue du côté de sa face 4C externe par rapport au véhicule 1. Dans ce qui suit, on étudie uniquement les éléments latéraux droits du bloc avant 2 du véhicule 1, étant entendu que la structure des éléments latéraux gauches du bloc avant 2 peut être déduite de celle des éléments latéraux droits par symétrie axiale par rapport à un axe longitudinal médian du véhicule 1.

On note X une direction longitudinale arrière-avant du véhicule 1, Y une direction transversale droite-gauche du véhicule 1 et Z une direction verticale bas-haut du véhicule 1. La paroi 4 s'étend, selon la direction verticale Z du véhicule 1, entre le longeron 7 droit du soubassement du véhicule 1 et le montant de baie 9 droit du véhicule 1, en regard de la structure de caisse du bloc avant 2 du véhicule. Un bord avant 4A de la paroi 4 délimite en partie un volume V₁ de passage de roue, alors qu'un bord arrière 4B de la paroi 4 délimite en partie un volume V₂ de réception d'une porte latérale droite du véhicule 1. Sur la figure 1, seul un profilé 8 de bandeau longitudinal, ou profilé de frise, de la porte latérale droite du véhicule 1 a été représenté. Le profilé 8 est un élément de la porte latérale qui relie les portions avant et arrière de la porte, au-dessous de la vitre de la porte.

Le véhicule 1 comprend un dispositif 10 de renfort latéral du bloc avant 2 du véhicule, fixé sur la structure de caisse du véhicule 1 au niveau de chaque paroi latérale 4 du véhicule. Comme expliqué précédemment, seul le dispositif de renfort 10 droit du bloc avant 2 est représenté sur la figure 1.

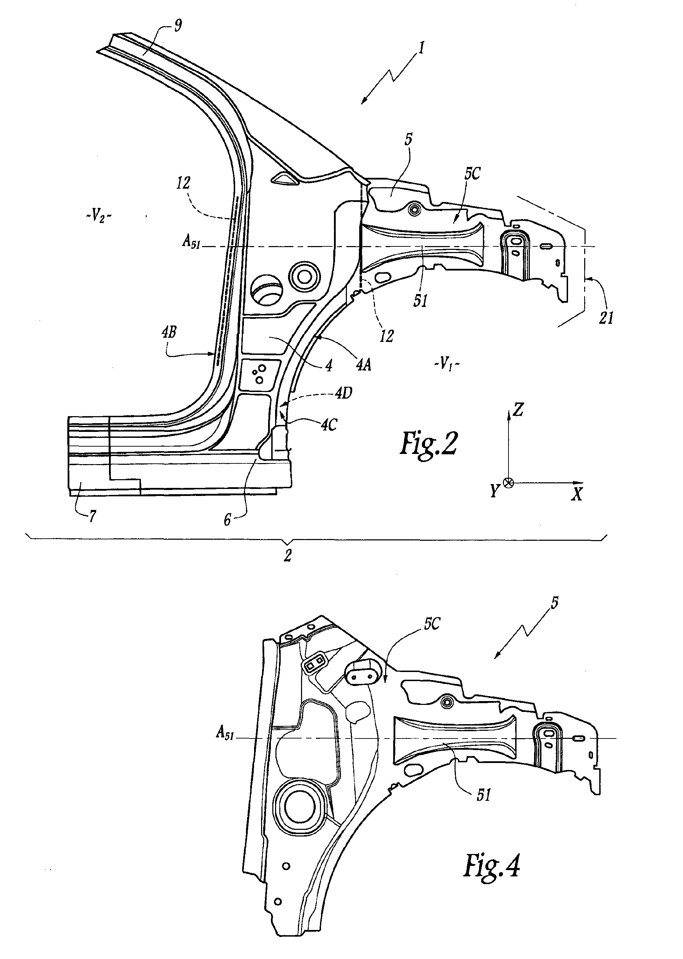

Le dispositif de renfort 10 comprend une doublure d'aile 5, visible plus particulièrement sur les figures 3 et 4, qui recouvre en partie la face interne 4D de la paroi 4. La doublure d'aile 5 se prolonge, vers l'avant du véhicule 1, au-delà du bord avant 4A de la paroi 4 et délimite la partie supérieure du volume V₁ de passage de roue. La doublure d'aile 5 est pourvue, sur sa face 5C externe par rapport au véhicule 1, d'une nervure 51 de forme allongée, centrée sur un axe longitudinal A₅₁. Comme montré sur les figures 1 et 3, la doublure d'aile 5 est destinée à être fixée sur la structure de caisse du véhicule 1 et sur la paroi 4 avec la nervure 51 disposée à l'avant du bord avant 4A de la paroi 4, l'axe longitudinal A₅₁ de la nervure 51 étant dirigé sensiblement parallèlement à la direction longitudinale X du véhicule 1. La paroi 4 et la doublure d'aile 5 sont formées par des pièces de tôle mises en forme par emboutissage et sont solidarisées l'une avec l'autre par soudage, au niveau de cordons de soudure 12. En particulier, la nervure 51 est formée par emboutissage de la tôle constitutive de la doublure d'aile 5.

Le dispositif de renfort 10 comprend également un élément de renfort 3 de forme allongée dont un axe longitudinal moyen est noté A₃. L'élément de renfort 3 est prévu pour être fixé sur la structure de ce bloc 2, contre la face externe 4C de la paroi 4 et la face externe 5C de la doublure d'aile 5. Lorsqu'il est fixé sur la structure du bloc 2, l'élément de renfort 1 s'étend, comme montré sur la figure 1, entre le pied avant 6 du véhicule 1 et l'extrémité avant 21 du bloc avant 2. L'axe longitudinal A₃ de l'élément de renfort 3 est alors sensiblement parallèle à la direction longitudinale X du véhicule 1. Comme visible plus particulièrement sur la figure 2, l'élément de renfort 3 présente sur toute sa longueur une section transversale en Ω formée par une portion principale 37 en U et deux pattes latérales 39. L'élément de renfort 3 est formé par une pièce de tôle mise en forme par emboutissage.

L'élément de renfort 3 est propre à être fixé sur les faces externes 4C et 5C de la paroi 4 et de la doublure d'aile 5 au niveau des pattes latérales 39, par exemple par soudage, avec l'ouverture de la portion principale 37 en U obturée par la paroi 4 et la doublure d'aile 5. Plus précisément, en configuration fixée du dispositif de renfort 10 sur la structure de caisse du véhicule 1, la nervure 51 de la doublure d'aile 5 est reçue dans le volume intérieur de la portion principale 37 à section transversale en U de l'élément de renfort 3, avec l'axe longitudinal A₅₁ de la nervure 51 dirigé sensiblement parallèlement à l'axe longitudinal A₃ de l'élément de renfort 3, comme montré sur la figure 1 où la nervure 51 est représentée en traits fantômes.

L'élément de renfort 3 comporte une partie arrière 31, destinée à être fixée sur le pied avant 6 dans le prolongement du profilé 8 de bandeau longitudinal de porte du véhicule 1. La partie arrière 31 est de forme allongée et centrée sur un axe longitudinal A₃₁ incliné par rapport à l'axe longitudinal moyen A₃ de l'élément de renfort 3. L'angle α d'inclinaison de l'axe A₃₁ par rapport à l'axe A₃ est choisi de telle sorte que, lorsque l'axe A₃ est parallèle à la direction longitudinale X du véhicule 1, l'axe A₃₁ est sensiblement aligné avec l'axe longitudinal A₈ du profilé 8 de bandeau de porte. La partie arrière 31 présente une bonne rigidité et une bonne résistance en compression selon les directions des axes A₃ et A₃₁.

L'élément de renfort 3 comporte également une partie avant 33, destinée à être disposée au voisinage de l'extrémité avant 21 du bloc avant 2 du véhicule 1. La partie avant 33 est de forme allongée et centrée sur l'axe longitudinal moyen A₃ de l'élément de renfort 3. La partie avant 33 est apte à être déformée en compression selon la direction de l'axe A₃, sous l'effet d'un effort de compression appliqué sur l'extrémité avant 33A de la partie avant 33 en direction de la partie arrière 31, comme montré par la flèche F de la figure 1. Un tel effort de compression F peut notamment résulter d'un choc frontal du véhicule 1 contre un obstacle non représenté.

La compressibilité de la partie avant 33 est obtenue grâce à une structure ondulée de la partie 33, formée par une succession de nervures 34 et de creux 36, dirigés transversalement par rapport à l'axe longitudinal A₃ de la partie avant 33 et juxtaposés de manière alternée selon la direction de cet axe. Plus précisément, chaque nervure 34 et chaque creux 36 s'étend sur toute la section transversale en U de la portion principale 37 de l'élément de renfort 3, à la fois dans la paroi 371 de fond et dans les parois 372 formant les ailes du U, depuis le bord 372A d'une paroi d'aile 372 jusqu'au bord 372B de la paroi d'aile 372 opposée. Un tel agencement des nervures 34 et des creux 36 de la partie avant 33 de l'élément de renfort 3 garantit une compressibilité maximale de la partie avant 33, ainsi qu'un écrasement axial prévisible et stable de la partie avant 33, sous l'effet de l'effort de compression F.

En particulier, grâce aux nervures 34 et creux 36 alternés de la partie avant 33, qui s'étendent sur toute la section en U de la portion principale 37, c'est-à-dire dans les deux directions Y et Z en configuration fixée de l'élément de renfort 3 sur la structure de caisse du véhicule 1, la déformation en compression de la partie avant 33 est purement axiale et parallèle à la direction longitudinale X du véhicule 1. Lors d'un choc frontal intervenant sur le véhicule 1, la partie avant 33 est ainsi apte, au fur et à mesure de sa compression axiale, à guider le recul du bloc moteur du véhicule 1 parallèlement à la direction longitudinale X du véhicule.

La partie avant 33 présente une longueur L₃₃, selon la direction de l'axe A₃, ajustée pour être égale à la distance maximale acceptable de recul du bloc moteur du véhicule 1 en direction du pied avant 6, qui est par exemple la distance maximale de recul du bloc moteur autorisée pour l'homologation du véhicule 1.

A l'arrière de la partie avant 33 déformable, l'élément de renfort 3 comporte une partie centrale 35 rigide, qui relie les parties arrière 31 et avant 33 l'une avec l'autre. La partie centrale 35 présente une épaisseur e₃₅, selon la direction verticale Z du véhicule 1 en configuration fixée de l'élément de renfort 3 sur la structure de caisse du véhicule, supérieure aux épaisseurs respectives e₃₁ et e₃₃, selon la même direction Z, des parties arrière 31 et avant 33. En particulier, la partie centrale 35 comporte une excroissance 391, formée par l'une des pattes latérales 39 de l'élément de renfort 3 à section en Ω, qui est destinée à s'étendre, en configuration fixée de l'élément de renfort 3 sur la structure de caisse du véhicule 1, en direction du longeron 7 du véhicule. La partie centrale 35 permet, grâce à son épaisseur e₃₅ supérieure aux épaisseurs des parties arrière 31 et avant 33, d'éviter le flambement de l'élément de renfort 3 à la jonction entre les parties 31 et 33 inclinées l'une par rapport à l'autre, sous l'effet de l'effort de compression F. En outre, la portion 391 dirigée vers le longeron 7 du véhicule 1 permet la transmission, vers le soubassement du véhicule 1, d'une partie des efforts de choc transitant dans la partie centrale 35 de l'élément de renfort 3.

Comme visible sur la figure 1, en configuration fixée du dispositif de renfort 10 sur la structure de caisse du véhicule 1, la nervure 51 de la doublure d'aile 5 s'étend, selon la direction longitudinale X du véhicule 1, dans le volume intérieur de la portion principale 37 en U de l'élément de renfort 3, depuis le volume intérieur de la partie centrale 35, à la jonction entre les parties arrière 31 et avant 33, jusqu'au volume intérieur d'une portion arrière 33B de la partie avant 33 de l'élément de renfort 3. Cet agencement de la nervure 51 de la doublure d'aile 5 dans le volume intérieur de l'élément de renfort 3 permet de rigidifier la structure de l'élément de renfort 3 à l'arrière de la partie avant 33 compressible et à la jonction entre les parties arrière 31 et avant 33. Il est ainsi possible de garantir que la compression du dispositif de renfort 10 parallèlement à la direction longitudinale X du véhicule 1 est bien limitée à la longueur L₃₃ de la partie avant 33 de l'élément de renfort 3 et que la distance de recul du bloc moteur lors d'un choc frontal sur le véhicule 1 est maintenue au-dessous d'une limite maximale acceptable.

La structure du dispositif de renfort 10 conforme à l'invention, dans lequel l'élément de renfort 3 coopère avec la nervure 51 de la doublure d'aile 5, permet d'obtenir à la fois une absorption d'une partie des efforts résultant d'un choc frontal sur le véhicule 1, grâce à la partie avant 33 de l'élément de renfort 3 déformable en compression parallèlement à la direction longitudinale X du véhicule 1, et une transmission efficace des efforts résiduels de chocs, non absorbés lors de la déformation de la partie avant 33 de l'élément de renfort 3, vers le profilé 8 de bandeau de porte et vers le soubassement du véhicule 1, grâce aux parties arrière 31 et centrale 35 de l'élément de renfort 3 qui présentent une rigidité importante et sont renforcées par la nervure 51 de la doublure d'aile 5. La nervure 51, qui s'étend dans le volume intérieur de la partie centrale 35 et de la portion arrière 33B de la partie avant 33, permet de stopper la compression de la partie avant 33 lors d'un choc frontal sur le véhicule 1, de manière à garantir que la partie centrale 35 et la partie arrière 31 ne se déforment pas. L'absorption d'une partie des efforts de chocs par compression de la partie avant 33 de l'élément de renfort 3 permet de réduire les efforts qui transitent dans la structure de caisse du véhicule 1, de sorte qu'il est possible de diminuer la masse de cette structure de caisse.

La structure ondulée de la partie avant 33, prévue sur toute la section en U de la portion principale 37 de l'élément de renfort 3, est particulièrement avantageuse car elle permet d'obtenir une compressibilité et une stabilité de fonctionnement optimales de la partie avant 33 de l'élément de renfort 3 lors d'un choc frontal sur le véhicule 1. En particulier, la partie avant 33 est propre à guider le recul du bloc moteur du véhicule 1 en direction du pied avant 6, parallèlement à la direction longitudinale X du véhicule 1, grâce à sa déformation en compression purement axiale. L'adaptation de la longueur L₃₃ de la partie avant 33 de l'élément de renfort 3 et du positionnement de la nervure 51 de la doublure d'aile 5 dans le volume intérieur des parties centrale 35 et avant 33 de l'élément de renfort 3 permettent en outre de maîtriser la distance de recul du bloc moteur lors d'un choc frontal sur le véhicule 1 et de maintenir cette distance de recul au-dessous d'une limite maximale autorisée.

De plus, le positionnement de la partie arrière 31 de l'élément de renfort 3, qui présente une rigidité importante, dans le prolongement du profilé 8 de bandeau de porte permet une transmission privilégiée des efforts résiduels de choc, non absorbés par déformation de la partie avant 33 lors d'un choc frontal sur le véhicule 1, dans la porte latérale du véhicule plutôt que dans le montant de baie 9. En effet, du fait de la rigidité importante de la partie arrière 31, renforcée à l'avant par la nervure 51 de la doublure d'aile 5, les efforts résiduels de choc sont transmis précocement dans la porte, avant qu'ils ne montent dans le montant de baie 9. Une partie des efforts résiduels de choc est également dirigée vers le soubassement du véhicule, à travers la portion 391 de la partie centrale 35. La transmission des efforts résiduels de choc, de manière préférentielle et précoce, dans la porte et le soubassement du véhicule 1, plutôt que dans le montant de baie 9, permet de prévoir une section réduite de ce montant de baie 9. Une telle section réduite de chaque montant de baie 9 du véhicule 1 est particulièrement avantageuse pour satisfaire aux exigences de visibilité dans l'habitacle du véhicule et aux contraintes de style, qui visent à renforcer l'impression d'espace d'un passager installé dans l'habitacle.

La rigidité importante des parties arrière 31 et centrale 35 de l'élément de renfort 3, renforcée par la nervure 51 de la doublure d'aile 5, garantit un passage efficace des efforts résiduels de choc, après compression de la partie avant 33, vers le profilé 8 de bandeau de porte et le soubassement du véhicule 1. Ainsi, même lorsque ces efforts résiduels de choc sont importants, leur transmission efficace dans ces deux voies d'effort limite le recul du pied avant 6 du véhicule et supprime le risque de désolidarisation de la porte par rapport à la structure du véhicule. Grâce au recul maîtrisé du bloc moteur en direction du pied avant 6 lors d'un choc frontal sur le véhicule 1, garanti par un dimensionnement approprié de la partie avant 33 compressible de l'élément de renfort 3 et un positionnement adapté de la nervure 51 de la doublure d'aile 5 dans le volume intérieur de l'élément de renfort 3, le véhicule 1 conforme à l'invention assure la sauvegarde de l'espace d'habitacle du véhicule et la sécurité des passagers en cas de choc frontal sur le véhicule. Enfin, le dispositif de renfort 10 comprenant l'élément de renfort 3 et la doublure d'aile 5 est fabriqué de manière aisée, par emboutissage de deux tôles. De plus, comme l'élément de renfort 3 et la doublure d'aile 5 présentent des structures relativement simples, leur fabrication par emboutissage ne nécessite pas un outillage perfectionné. Ainsi, le coût de fabrication du dispositif de renfort 10 selon l'invention est limité.

L'invention n'est pas limitée à l'exemple décrit et représenté. En particulier, l'élément de renfort 3 du dispositif de renfort 10 conforme à l'invention peut présenter une structure différente de celle décrite précédemment. La structure ondulée de la partie avant 33 de l'élément de renfort 3 peut notamment être différente de celle représentée sur les dessins, le nombre, la forme et l'orientation des nervures 34 et creux 36 de la partie avant 33 pouvant être modifiés. De plus, l'extrémité avant 33A de la partie avant 33 peut être fermée, et non ouverte comme montré sur les figures. Enfin, la nervure 51 de la doublure d'aile 5 du dispositif de renfort 10 peut être reçue dans le volume intérieur de l'élément de renfort 3 en s'étendant plus ou moins dans le volume intérieur de la partie avant 33 déformable et dans le volume intérieur des parties centrale 35 et arrière 31 rigides. En particulier, en fonction des formes relatives de la paroi latérale 4 et de la doublure d'aile 5, la partie arrière de la nervure 51 peut être conçue pour s'étendre dans le volume intérieur de la partie arrière 31 de l'élément de renfort 3.

## Revendications

1. Structure de caisse de véhicule automobile (1) comportant un bloc avant (2) et un dispositif (10) de renfort latéral destiné à équiper ledit bloc avant (2), ce dispositif (10) de renfort latéral comprenant un élément de renfort (3) de forme allongée, l'élément de renfort (3) étant destiné à être au niveau d'une paroi latérale (4) du bloc avant (2) en s'étendant, selon la direction longitudinale (X) du véhicule (1), entre un pied de montant avant (6) du véhicule (1) adjacent à la paroi latérale (4) et une extrémité avant (21) du bloc avant (2), avec l'axe longitudinal (A₃) de l'élément de renfort (3) dirigé sensiblement parallèlement à ladite direction longitudinale (X), le dispositif de renfort (10) comprenant en outre un élément de doublure (5) du bloc avant (2), l'élément de renfort (3) comportant au moins une partie (31, 33, 35) à section transversale en U et l'élément de doublure (5) étant pourvu d'une nervure (51) allongée, la nervure (51) étant destinée à être reçue dans le volume intérieur de la partie (31, 33, 35) à section transversale en U de l'élément de renfort (3), avec l'axe longitudinal (A₅₁) de la nervure (51) dirigé sensiblement parallèlement à l'axe longitudinal (A₃) de l'élément de renfort (3), **caractérisé en ce que** l'élément de renfort (3) comporte une première (31) et une deuxième (33) parties d'extrémité, la première partie (31) étant rigide et destinée à être fixée sur le pied avant (6), alors que la deuxième partie (33) est déformable en compression selon la direction de l'axe longitudinal (A₃) de l'élément de renfort (3) et destinée à être disposée au voisinage de l'extrémité avant (21) du bloc avant (2), la nervure (51) de l'élément de doublure (5) étant destinée à être reçue dans le volume intérieur d'une partie (35) à section transversale en U de l'élément de renfort (3) qui forme une jonction entre les première (31) et deuxième (33) parties.

2. Structure de caisse de véhicule automobile (1) selon la revendication 1, **caractérisé en ce que** la deuxième partie (33) de l'élément de renfort (3) est à section transversale en U, la nervure (51) de l'élément de doublure (5) étant destinée à être reçue dans le volume intérieur d'une portion d'extrémité (33B) de la deuxième partie (33) la plus proche de la première partie (31) de l'élément de renfort (3).

3. Structure de caisse de véhicule automobile (1) selon la revendication 2, **caractérisé en ce que** la deuxième partie (33) de l'élément de renfort (3) est de forme allongée et a une structure ondulée, formée par une succession de nervures (34) et de creux (36) transversaux, juxtaposés selon la direction de l'axe longitudinal (A₃) de l'élément de renfort (3), chaque nervure (34) et chaque creux (36) s'étendant sur toute la section transversale en U de la deuxième partie (33), depuis le bord (372A) d'une paroi (372) formant une aile du U jusqu'au bord (372B) de la paroi (372) opposée formant l'autre aile du U.

4. Structure de caisse de véhicule automobile (1) selon l'une quelconque des revendications 1 à 3, **caractérisé en ce que** la deuxième partie (33) de l'élément de renfort (3) a une longueur (L₃₃), selon la direction de l'axe longitudinal (A₃), égale à la distance maximale acceptable de recul du bloc moteur du véhicule (1) en direction du pied avant (6).

5. Structure de caisse de véhicule automobile (1) selon l'une quelconque des revendications 1 à 4, **caractérisé en ce que** la première partie (31) de l'élément de renfort (3) est destinée à être fixée sur le pied avant (6) dans le prolongement d'un profilé (8) de bandeau longitudinal d'une porte du véhicule (1) montée sur le pied avant (6).

6. Structure de caisse de véhicule automobile (1) selon la revendication 5, **caractérisé en ce que** la première partie (31) de l'élément de renfort (3) est de forme allongée, l'axe longitudinal (A₃₁) de la première partie (31) étant destiné à être sensiblement aligné avec l'axe longitudinal (A₈) du profilé (8) de bandeau de porte en configuration fixée de l'élément de renfort (3) sur la structure de caisse du véhicule (1).

7. Structure de caisse de véhicule automobile (1) selon l'une quelconque des revendications précédentes, **caractérisé en ce que** l'élément de renfort (3) et l'élément de doublure (5) sont formés chacun par une pièce de tôle mise en forme par emboutissage.

8. Structure de caisse de véhicule automobile (1) selon l'une quelconque des revendications précédentes, **caractérisé en ce que** l'élément de doublure (5) est une doublure d'aile du bloc avant (2) du véhicule (1), la nervure (51) étant ménagée sur une face externe (5C) de l'élément de doublure (5).

9. Structure de caisse de véhicule automobile (1) selon l'une quelconque des revendications précédentes, **caractérisé en ce que** les première (31) et deuxième (33) parties de l'élément de renfort (3) sont reliées l'une à l'autre par une partie centrale (35) comportant une portion (391) destinée à s'étendre en direction du soubassement (7) du véhicule en configuration fixée de l'élément de renfort (3) sur la structure de caisse du véhicule (1).

10. Structure de caisse de véhicule automobile (1) selon l'une quelconque des revendications précédentes, **caractérisé en ce que** l'élément de renfort (3) a une section transversale en Ω sur toute sa longueur, les pattes latérales (39) du Ω formant des pattes de fixation de l'élément de renfort (3) sur la paroi latérale (4).

11. Véhicule automobile (1), **caractérisé en ce qu'**il comprend une structure de caisse (1) selon l'une quelconque des revendications précédentes.

## Patentansprüche

1. Aufbaustruktur für Kraftfahrzeug (1), die einen Vorderbau (2) und eine seitliche Verstärkungsvorrichtung (10), die dazu bestimmt ist, den Vorderbau (2) auszustatten, aufweist, wobei diese seitliche Verstärkungsvorrichtung (10) ein Verstärkungselement (3) mit länglicher Form aufweist, wobei das Verstärkungselement (3) dazu bestimmt ist, auf der Ebene einer Seitenwand (4) des Vorderbaus (2) zu liegen und sich entlang der Längsrichtung (X) des Kraftfahrzeugs (1) zwischen einem vorderen Strebenfuß (6) des Kraftfahrzeugs (1) neben der Seitenwand (4) und einem vorderen Ende (21) des Vorderblocks (2) zu erstrecken, mit der Längsachse (A₃) des Verstärkungselements (3) im Wesentlichen parallel zu der Längsrichtung (X) ausgerichtet, wobei die Verstärkungsvorrichtung (10) ferner ein Auskleidungselement (5) des Vorderblocks (2) aufweist, wobei das Verstärkungselement (3) mindestens ein Teil (31, 33, 35) mit U-Querschnitt aufweist, und das Auskleidungselement (5) mit einer gestreckten Längsrippe (51) versehen ist, wobei die Rippe (51) dazu bestimmt ist, in dem Innenraum des Teils (31, 33, 35) mit U-Querschnitt des Verstärkungselements (3) aufgenommen zu werden, mit der Längsachse (A₅₁) der Rippe (51) im Wesentlichen parallel zu der Längsachse (A₃) des Verstärkungselements (3) ausgerichtet, **dadurch gekennzeichnet, dass** das Verstärkungselement (3) einen erstes (31) und ein zweites (33) Endteil aufweist, wobei das erste Teil (31) starr und dazu bestimmt ist, auf dem vorderen Fuß (6) befestigt zu sein, während das zweite Teil (33) unter Druck entlang der Richtung der Längsachse (A₃) des Verstärkungselements (3) verformbar und dazu bestimmt ist, in der Nähe des vorderen Endes (21) des Vorderblocks (2) angeordnet zu sein, wobei die Rippe (51) des Auskleidungselements (5) dazu bestimmt ist, in dem Innenraum eines Teils (35) mit U-Querschnitt des Verstärkungselements (3), das eine Verbindung zwischen dem ersten (31) und dem zweiten (33) Teil bildet, aufgenommen zu sein.

2. Aufbaustruktur eines Kraftfahrzeugs (1) nach Anspruch 1, **dadurch gekennzeichnet, dass** das zweite Teil (33) des Verstärkungselements (3) einen U-Querschnitt aufweist, wobei die Rippe (51) des Auskleidungselements (5) dazu bestimmt ist, in dem Innenraum eines Endteils (33B) des zweiten Teils (33), das dem ersten Teil (31) des Verstärkungselements (3) am nächsten liegt, aufgenommen zu sein.

3. Aufbaustruktur eines Kraftfahrzeugs (1) nach Anspruch 2, **dadurch gekennzeichnet, dass** das zweite Teil (33) des Verstärkungselements (3) gestreckte Form aufweist und eine wellige Struktur hat, die durch eine Abfolge von Rippen (34) und Quervertiefungen (36), die entlang der Richtung der Längsachse (A₃) des Verstärkungselements (3) nebeneinander liegen, ausgebildet ist, wobei sich jede Rippe (34) und jede Vertiefung (36) auf dem gesamten U-Querschnitt des zweiten Teils (33) von dem Rand (372A) einer Wand (372), die einen Schenkel des U bildet, bis zu dem Rand (372B) der gegenüberliegenden Wand (372), die den anderen Schenkel des U bildet, erstreckt.

4. Aufbaustruktur eines Kraftfahrzeugs (1) nach einem der Ansprüche 1 bis 3, **dadurch gekennzeichnet, dass** das zweite Teil (33) des Verstärkungselements (3) eine Länge (L₃₃) entlang der Richtung der Längsachse (A₃) gleich einer maximal akzeptablen Rückschubentfernung des Motorblocks des Kraftfahrzeugs (1) in Richtung des vorderen Fußes (6) aufweist.

5. Aufbaustruktur eines Kraftfahrzeugs (1) nach einem der Ansprüche 1 bis 4, **dadurch gekennzeichnet, dass** das erste Teil (31) des Verstärkungselements (3) dazu bestimmt ist, auf dem vorderen Fuß (6) in der Verlängerung eines länglichen Bandprofils (8) einer Fahrzeugtür (1), die auf den vorderen Fuß (6) montiert ist, befestigt zu sein.

6. Aufbaustruktur eines Kraftfahrzeugs (1) nach Anspruch 5, **dadurch gekennzeichnet, dass** das erste Teil (31) des Verstärkungselements (3) gestreckte Form aufweist, wobei die Längsachse (A₃₁) des ersten Teils (31) dazu bestimmt ist, im Wesentlichen mit der Längsachse (A₈) des Türbandprofils (8) in der auf dem Verstärkungselement (3) auf der Aufbaustruktur des Kraftfahrzeugs (1) befestigten Konfiguration ausgerichtet zu sein.

7. Aufbaustruktur eines Kraftfahrzeugs (1) nach einem der vorhergehenden Ansprüche, **dadurch gekennzeichnet, dass** das Verstärkungselement (3) und das Auskleidungselement (5) jeweils aus einem Blechteil, das durch Stanzen geformt ist, ausgebildet sind.

8. Aufbaustruktur eines Kraftfahrzeugs (1) nach einem der vorhergehenden Ansprüche, **dadurch gekennzeichnet, dass** das Auskleidungselement (5) eine Auskleidung eines Flügels des Vorderblocks (2) des Kraftfahrzeugs (1) ist, wobei die Rippe (51) auf einer Außenseite (5C) des Auskleidungselements (5) eingerichtet ist.

9. Aufbaustruktur eines Kraftfahrzeugs (1) nach einem der vorhergehenden Ansprüche, **dadurch gekennzeichnet, dass** das erste (31) und das zweite (33) Teil des Verstärkungselements (3) miteinander durch ein zentrales Teil (35) verbunden sind, das einen Teil (391) aufweist, der dazu bestimmt ist, sich in Richtung des Unterbaus (7) des Kraftfahrzeugs in der auf der Aufbaustruktur des Kraftfahrzeugs (1) befestigten Konfiguration des Verstärkungselements (3) zu erstrecken.

10. Aufbaustruktur eines Kraftfahrzeugs (1) nach einem der vorhergehenden Ansprüche, **dadurch gekennzeichnet, dass** das Verstärkungselement auf seiner gesamten Länge einen Ω-Querschnitt aufweist, wobei die seitlichen Schenkel (39) des Ω Befestigungsschenkel des Verstärkungselements (3) auf der Seitenwand (4) bilden.

11. Kraftfahrzeug (1), **dadurch gekennzeichnet, dass** es eine Aufbaustruktur (1) nach einem der vorhergehenden Ansprüche aufweist.

## Claims

1. A body structure of a motor vehicle (1) comprising a front end (2) and a lateral reinforcement device (10) intended to equip the said front end (2), this lateral reinforcement device (10) including a reinforcement element (3) of elongated shape, the reinforcement element (3) being intended to be at the level of a lateral wall (4) of the front end (2) by extending, along the longitudinal direction (X) of the vehicle (1), between a front pillar (6) of the vehicle (1) adjacent to the lateral wall (4) and a front extremity (21) of the front end (2), with the longitudinal axis (A₃) of the reinforcement element (3) directed substantially parallel to the said longitudinal direction (X), the reinforcement device (10) further including a lining element (5) of the front end (2), the reinforcement element (3) comprising at least one part (31, 33, 35) of U-shaped cross-section, and the lining element (5) being provided with an elongated rib (51), the rib (51) being intended to be received in the interior volume of the part (31, 33, 35) of U-shaped cross-section of the reinforcement element (3), with the longitudinal axis (A₅₁) of the rib (51) directed substantially parallel to the longitudinal axis (A₃) of the reinforcement element (3), **characterized in that** the reinforcement element (3) comprises a first (31) and a second (33) extremity part, the first part (31) being rigid and intended to be fixed on the front pillar (6), whereas the second part (33) is deformable in compression along the direction of the longitudinal axis (A₃) of the reinforcement element (3) and intended to be disposed in the vicinity of the front extremity (21) of the front end (2), the rib (51) of the lining element (5) being intended to be received in the interior volume of a part (35) with U-shaped cross-section of the reinforcement element (3) which forms a junction between the first (31) and second (33) parts.

2. The body structure of a motor vehicle (1) according to Claim 1, **characterized in that** the second part (33) of the reinforcement element (3) has a U-shaped cross-section, the rib (51) of the lining element (5) being intended to be received in the interior volume of an extremity portion (33B) of the second part (33) closest to the first part (31) of the reinforcement element (3).

3. The body structure of a motor vehicle (1) according to Claim 2, **characterized in that** the second part (33) of the reinforcement element (3) is of elongated shape and has a corrugated structure, formed by a succession of transverse ribs (34) and troughs (36), juxtaposed along the direction of the longitudinal axis (A₃) of the reinforcement element (3), each rib (34) and each trough (36) extending over the entire U-shaped cross-section of the second part (33), from the edge (372A)of a wall (372) forming a wing of the U up to the edge (372B) of the opposite wall (372) forming the other wing of the U.

4. The body structure of a motor vehicle (1) according to any one of Claims 1 to 3, **characterized in that** the second part (33) of the reinforcement element (3) has a length (L₃₃), along the direction of the longitudinal axis (A₃), equal to the maximum acceptable setback distance of the engine block of the vehicle (1) in the direction of the front pillar (6).

5. The body structure of a motor vehicle (1) according to any one of Claims 1 to 4, **characterized in that** the first part (31) of the reinforcement element (3) is intended to be fixed on the front pillar (6) in the extension of a longitudinal panel profile (8) of a door of the vehicle (1) mounted on the front pillar (6).

6. The body structure of a motor vehicle (1) according to Claim 5, **characterized in that** the first part (31) of the reinforcement element (3) is of elongated shape, the longitudinal axis (A₃₁) of the first part (31) being intended to be substantially aligned with the longitudinal axis (A₈) of the door panel profile (8) in fixed configuration of the reinforcement element (3) on the body structure of the vehicle (1).

7. The body structure of a motor vehicle (1) according to any one of the preceding claims, **characterized in that** the reinforcement element (3) and the lining element (5) are each formed by a piece of sheet metal shaped by stamping.

8. The body structure of a motor vehicle (1) according to any one of the preceding claims, **characterized in that** the lining element (5) is a wing lining of the front end (2) of the vehicle (1), the rib (51) being arranged on an external face (5C) of the lining element (5).

9. The body structure of a motor vehicle (1) according to any one of the preceding claims, **characterized in that** the first (31) and second (33) parts of the reinforcement element (3) are connected to one another by a central part (35) comprising a portion (391) intended to extend in the direction of the underbody (7) of the vehicle in fixed configuration of the reinforcement element (3) on the body structure of the vehicle (1).

10. The body structure of a motor vehicle (1) according to any one of the preceding claims, **characterized in that** the reinforcement element (3) has a Ω-shaped cross-section over its entire length, the lateral lugs (39) of the Ω forming fixing lugs of the reinforcement element (3) on the lateral wall (4).

11. A motor vehicle (1), **characterized in that** it includes a body structure (1) according to any one of the preceding claims.
